# EUROPEAN PATENT APPLICATION

(11) **EP 1 631 021 A1**
(43) Date of publication of application: **01.03.2006**
(21) Application number: 05255113.2
(22) Date of filing: 18.08.2005
(51) Int. Cl.: H04L 12/56, H04L 29/06, H04L 29/12

(54) **Method for routing messages between servers located on the same board**

(30) Priority: 27.08.2004 US 928418
(71) Applicant: LUCENT TECHNOLOGIES INC., Murray Hill, New Jersey 07974-0636 (US)
(72) Inventor: Bessis, Thierry, Naperville Illinois 60540 (US)
(74) Representative: Sarup, David Alexander

(57) **Abstract**

The present invention allows two SIP servers (111 and 121) that are located on the same board (101) to communicate with each other using an internal mechanism, a SIPia bus (131), without sending the message on an external network. Each SIP server (111 and 121) registers with a pre-DNS resolver (153). An originating SIP server (111) formulates a message that includes the name of a destination SIP server (121). The message is transmitted to the SIPia BUS (131) located on the board (101), which queries a pre-DNS resolver (153) to resolve the destination SIP server name (121). If the destination SIP server (121) is located on the same board (101) as the sending SIP server (111), the pre-DNS resolver (153) returns local destination information to the SIPia BUS (131). The SIPia BUS (131) transmits the message to the destination SIP server (121) without sending the message out of the board (101).

## Description

### FIELD OF THE INVENTION

The present invention relates generally to communication systems, and more particularly to the transmission of data between communication network servers.

### BACKGROUND OF THE INVENTION

Existing communication networks include a plurality of SIP (Session Initiation Protocol) servers. The SIP servers perform a variety of functions in support of the bearer traffic carried by the communication network, including call processing, announcement generation, conferencing, and the like.

In addition to the bearer traffic, communications networks carry control traffic. Control traffic is the set of messages which the servers use to communicate with each other. Control traffic is used for a plurality of purposes, such as bearer traffic control, network provisioning, network congestion information and the like. Both control and bearer traffic are transported via the transport mechanism deployed in the communication network.

In current communication systems, a single hardware board performs the functionality of a single network node. However, with the introduction of faster processors and increased computing power, a single hardware board can perform the functionality of multiple servers.

The communication path for the bearer traffic, however, still uses the transport mechanism of the communication network. Although this is necessary in systems in which each board includes a single server, it is highly inefficient in systems that includes multiple servers on a single board. Sending bearer traffic across the communication network's transport mechanism from a first server to a second server located on the same board is highly inefficient and consumes valuable bandwidth on the transport mechanism. The message needs to be serialized, sent out of the board over the IP network, and then received back at the same board from the IP network. The message then needs to be parsed at the receiving server. This leads to increased transmission time, potential delays, and possible errors.

Therefore, a need exists for a method that reduces network traffic and congestion on the external communication network when messages are sent between servers located on the same hardware board.

### BRIEF SUMMARY OF THE INVENTION

The present invention allows two SIP servers, or SIP components, that are located on the same board to communicate with each other using an internal mechanism, a SIPia bus, without sending the message on an external network. In accordance with an exemplary embodiment of the present invention, as each SIP server is initialized on a communication board, the SIP server registers with a pre-DNS resolver. This information is then available to be used for message routing between SIP servers.

In accordance with an exemplary embodiment of the present invention, an originating SIP server formulates a message for a destination SIP server. The message includes the name (URI) of the destination SIP server. The message is then transmitted to the SIPia BUS located on the board. The SIPia BUS queries a new element, a pre-DNS resolver, to resolve the destination server name (URI). The pre-DNS resolver determines if the destination SIP server is located on the same board as the sending SIP server. If so, the pre-DNS resolver returns local destination information to the SIPia BUS, which transmits the message to the destination SIP server without sending the message out of the board, thereby eliminating the step of sending the message on an external network, such as the Internet. If the destination SIP server is located on a different board than the sending SIP server, the pre-DNS resolver forwards the resolution query to a DNS server, which determines the external location of the destination SIP server and returns the routing information so that the message can be sent over the external network to the destination SIP server.

The present invention thereby conserves network resources by internally routing messages between SIP servers residing on the same hardware board. The SIP servers are unaware of the physical location of the other network node and the method used for supporting transporting messages between the nodes.

### BRIEF DESCRIPTION OF THE SEVERAL VIEWS OF THE DRAWINGS

FIG. 1 depicts a communication network including a first board that includes two servers thereon in accordance with an exemplary embodiment of the present invention.
FIG. 2 depicts the pre-DNS resolver of FIG. 1 in more detail in accordance with an exemplary embodiment of the present invention.
FIG. 3 depicts a flowchart of a method for routing messages between a first server and a second server in accordance with an exemplary embodiment of the present invention.

### DETAILED DESCRIPTION OF THE INVENTION

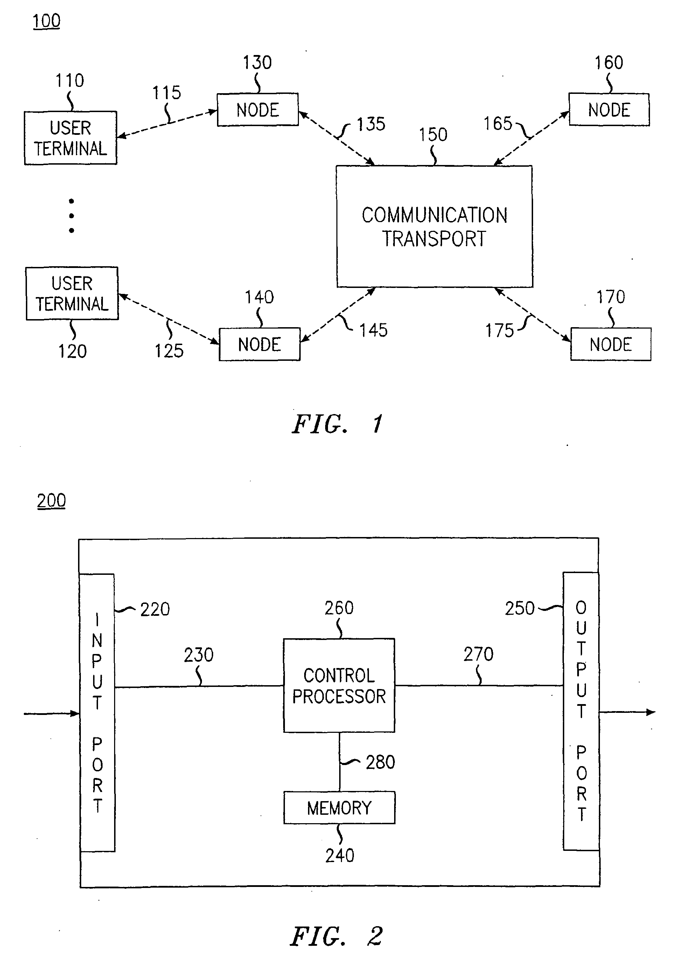

The present invention can be better understood with reference to FIGs. 1 through 3. FIG. 1 depicts a communication network 100 in accordance with an exemplary embodiment of the present invention. Communication network 100 includes first board 101, second board 103, third board 105, DNS server 109, and Internet 110.

First board 101 includes SIP server 111, SIP server 121, SIPia bus 131, SIP port 141, and Pre-DNS resolver 151. First board 101 includes two SIP servers, 111 and 121, located on one board, first board 101.

SIP servers 111 and 121 are referred to as SIP components in the 3GPP S-CSCF (Serving-Call State Control Function), P-CSCF (Proxy-CSCF), and I-CSCF (Interrogating-CSCF). SIP servers 111 and 121 do not need to be aware of the transport mechanism used to send messages to other servers. SIP servers 111 and 121 are preferably required to register with pre-DNS resolver 151 upon installation. The registration includes the name and address of the SIP server.

SIPia bus 131 is a software platform that utilizes SIP routing rules. SIPia bus 131 enables SIP servers 111 and 121 to communicate with each other in a highly efficient manner utilizing the SIPia BUS transport, since SIP servers 111 and 121 are located on the same board, first board 101. SIPia bus 131 also communicates with SIP port 141 for sending and receiving messages to other boards via internet 110.

First board 101 communicates with second board 103 and third board 105 by sending SIP messages across internet network 110 utilizing SIP port 141.

Second board 103 includes SIP server 113, SIPia BUS 133, SIP port 143, Pre-DNS resolver 153. Third board 105 includes SIP server 115, SIPia BUS 135, SIP port 145, Pre-DNS resolver 155.

Second board 103 and third board 105 each include a single SIP server, SIP servers 113 and 115, respectively. As an example, SIP server 113 sends messages to other SIP servers by sending the message to SIPia bus 133, which queries pre-DNS resolver 153. Pre-DNS resolver 153 determines that the destination server is not on the same board, and thus cannot be resolved locally. Pre-DNS resolver 153 queries DNS resolver 109, which determines the location and IP address of the destination SIP server and returns these to pre-DNS resolver 153 and then to SIPia bus 133. SIPia bus 133 routes the message to SIP port 143, which sends the message to the destination SIP server via Internet 110. Similar processing occurs when sending a message from SIP server 115 located within board 105.

Pre-DNS resolver 151 is a processor that attempts to resolve the URI locally on first board 101. If pre-DNS resolver 151 is unable to resolve the URI, pre-DNS resolver 151 queries DNS server 109. Pre-DNS resolver 151 is depicted in greater detail in FIG. 2 below.

DNS server 109 converts the URI to a transport type, such as TCP (Transmission Control Protocol), STCP, or UDP (User Datagram Protocol), and a physical IP address. The transport type and physical IP address are then returned to SIPia BUS 131.

Internet 110 is an external network that utilizes the Internet Protocol suite. IP contains a network address and allows messages to be routed to a different network or sub-network.

FIG. 2 depicts pre-DNS resolver 151 of FIG. 1 in more detail in accordance with an exemplary embodiment of the present invention. Pre-DNS resolver 151 includes an input port 201, a processor 203, memory 205, and an output port 207.

Input port 201 receives messages from SIP servers, such as SIP servers 111 and 121. When a new SIP server registers, the SIP server sends a registration message to pre-DNS resolver 151 via input port 201. Input port 201 forwards the registration message to processor 203.

Input port 201 also receives resolution queries from a SIPia BUS. Input port 201 passes the messages to processor 203.

Processor 203 receives queries from input port 201. For registration messages, processor 203 determines the address of the registering SIP server and stored this information in memory 205.

Processor 203 also receives queries to resolve the address of a destination SIP server. Processor 203 determines the address of the destination SIP server and checks memory 205 for the destination SIP server. If the address of the destination SIP server is located in memory 205, processor 203 returns the internal address of the destination SIP server to the SIPia BUS via output port 207. If the address of the destination SIP server is not located in memory 205, processor 203 sends the request to DNS server 109 via output port 207.

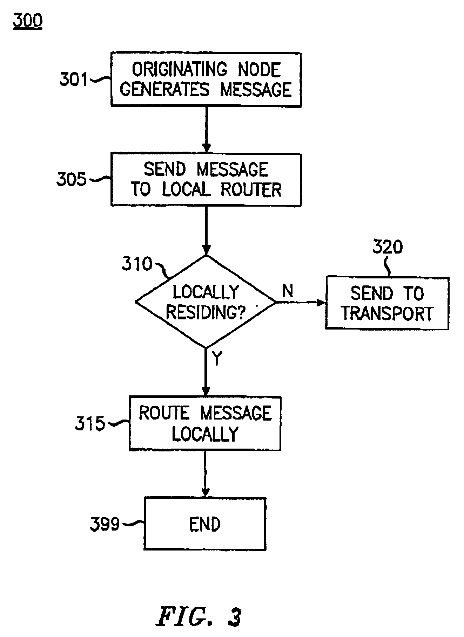

FIG. 3 depicts a flowchart 300 of a method for routing messages between a first server and a second server in accordance with an exemplary embodiment of the present invention.

First SIP server 111 generates (301) a message that is intended for second SIP server 121. First SIP sever 111 and second SIP server 121 are located on first board 101. First SIP server 111 does not need to know the location of second SIP server 121. SIP server 111 inserts the URI (Uniform Resource Identifier) of SIP server 121 in the SIP message. The URI is an addressing technology for identifying resources on the Internet or a private intranet. URIs are typically one of two types, Uniform Resource Locators (URLs), which are addresses with network locations, or Uniform Resource Names (URNs), which are persistent names that are address independent.

The message intended for second SIP server 121 is preferably an internal representation of a SIP message, referred to as a SIPia message. The SIPia message is similar to a standard SIP message, but is represented as structured binary information and not as serial text information, as in a typical SIP information. This allows the message to be processed in a more efficient manner.

First board 101 determines (303) if second SIP server 121 is located on the same board as first SIP server 111. This is done to determine if first board 101 needs to send the message over Internet 110 or if first board 101 can send the message to second SIP server 121 without utilizing Internet 110.

In an exemplary embodiment of the present invention, the message includes a routing header that includes a representation of the destination server and the domain of the destination server. The message is sent by first board 101 to pre-DNS server 151 via SIPia BUS 131, preferably utilizing a higher layer protocol.

Pre-DNS resolver 151 determines if the destination server, in this case second SIP server 121, has been registered. Registration is preferably dynamic, and performed during initialization of the board associated with the SIP server. Pre-DNS resolver 151 knows that the component is running on first board 101, and also knows the internal address of SIP server 121.

If second SIP server 121 is registered on pre-DNS resolver 151 as determined at step 303, first board 101 sends (305) the message to second SIP server 121 without utilizing the IP network, Internet 110. Pre-DNS server 151 returns, in response to the message, a message that includes the type of transport for the message and the internal port address of the destination server, in this case second SIP server 121.

The message is then routed to SIPia Bus 131, which updates the message with the selected transport type, internal, and the destination address. The message is then looped and queued within SIPia Bus 131 without leaving first board 101. In this manner, the message is not sent on Internet 110. SIPia Bus 131 treats the message as it would a message received from Internet 110 via SIP port 141. SIPia Bus 131 routes the message to second SIP server 121, preferably utilizing a higher layer protocol.

In accordance with an exemplary embodiment of the present invention, the transport layer within first board 101 does not serialize the SIP message, but rather sends the SIPia message as originally received to SIP server 121. In this manner, the SIP message does not need to be parsed by SIP server 121, thereby providing faster processing, a lower usage of system resources, increased accuracy of the message, and an increased throughput.

If pre-DNS resolver 151 determines that a message is intended for a server on a different board in step 303, pre-DNS resolver 151 forwards the message to DNS resolver 109. DNS resolver 109 determines (311) the destination address of the second server. The address information is returned to board 101 via pre-DNS resolver 151, so that the message can be routed to the destination SIP server via Internet 110.

First board 101 then sends (313) the message to the second SIP server, such as SIP server 113 or SIP server 115, utilizing IP network 110.

The present invention thereby provides a method that allows two servers located on the same board to communicate with each other via the SIPia bus without utilizing an external IP network. This is accomplished by using a pre-DNS resolver that efficiently provides the internal destination address of the destination server. The present invention is transparent to the SIP servers.

Benefits provided by the present invention on the sending side include the removal of the need to go to a DNS server to send a message to a locally-residing SIP server. Further, since the message is not travelling on the external IP network, the need to serialize the message is removed. This save precious processing resources. In addition, there is no need to go through the internet stacks and the Ethernet device to send the message. This allows the message to be sent in a significantly more efficient manner, since no IP network resources are used.

On the receiving side, there is no need to go through the internet stack and the Ethernet device to receive a SIP message. In addition, there is no need to allocate a new buffer memory, and no need to parse the incoming message, since the message was not serialized. This saves time and network resources.

The present invention also provides a more reliable communication network, since the call processing of the two SIP servers run on the same board, and therefore message transmission is dependent only upon one board and not multiple boards.

While this invention has been described in terms of certain examples thereof, it is not intended that it be limited to the above description, but rather only to the extent set forth in the claims that follow.

## Claims

1. A method for routing messages between a first server on a board and a second server located on the board, the board being coupled to a network that utilizes a transport protocol, the method comprising:
generating a message at a first server intended for a second server located on the same board as the first server;
determining a local address of the second server; and
sending the message to the second server using the local address of the second server without utilizing the network and without using the transport protocol.

2. A method for routing messages between a first server on a board and a second server located on the board in accordance with claim 1, wherein the step of generating a message comprises generating a message that includes an internal representation of a SIP message.

3. A method for routing messages between a first server on a board and a second server located on the board in accordance with claim 1, wherein the step of generating a message comprises generating a message that includes a routing header that includes a representation of the second server and the domain of the second server.

4. A method for routing messages between a first server on a board and a second server located on the board in accordance with claim 1, wherein the step of determining a local address of the second server is done by a pre-DNS resolver.

5. A method for routing messages between a first server on a board and a second server located on the board in accordance with claim 1, wherein the step of sending the message to the second server comprises looping the message within a SIPia Bus located within the board.

6. A method for routing messages between a first server on a board and a second server located on the board in accordance with claim 1, wherein the step of sending the message to the second server comprises sending the message to the second server without serializing the message.

7. A pre-DNS resolver comprising:
an input port for receiving a SIP server registration message and for receiving a message from a first server and intended for a second server, the SIP server registration message including address information for a SIP server;
memory for storing the address information;
a processor for determining if the second server is located on the same board as the first server; and
an output port for sending the address information of the second server.

8. A pre-DNS resolver in accordance with claim 7, wherein the processor forwards a resolution query to a DNS server via the output port if the second server is located on a different board than the first server.

9. A pre-DNS resolver in accordance with claim 7, wherein the input port receives resolution queries from a SIPia BUS.

10. A pre-DNS resolver in accordance with claim 7, wherein the processor returns the internal address of the second server via the output port if the address of the second server is located in the memory.
